**Europäisches Patentamt**

**European Patent Office**

**Office européen des brevets**

(11) Veröffentlichungsnummer: **0 208 923**
**B1**

(12) **EUROPÄISCHE PATENTSCHRIFT**

(45) Veröffentlichungstag der Patentschrift:
27.09.89

(21) Anmeldenummer: 86108100.8

(22) Anmeldetag: 13.06.86

(51) Int. Cl.⁴: **B 60 Q 1/00, F 21 M 7/00**

(54) Leuchteneinheit.

(30) Priorität: 15.07.85 DE 3525198

(43) Veröffentlichungstag der Anmeldung:
21.01.87 Patentblatt 87/4

(45) Bekanntmachung des Hinweises auf die Patenterteilung:
27.09.89 Patentblatt 89/39

(84) Benannte Vertragsstaaten:
DE FR GB IT SE

(56) Entgegenhaltungen:
DE-A- 2 626 814
DE-A- 2 847 908
DE-B- 2 656 755
GB-A- 2 076 516

(73) Patentinhaber: **Adam Opel Aktiengesellschaft,
Bahnhofsplatz 1 Postfach 1560, D-6090 Rüsselsheim
(DE)**

(72) Erfinder: **Krumb, Heinrich Wilhelm, Oderstrasse 14,
D-6097 Trebur (DE)**

(74) Vertreter: **Rosenfeld, Jürgen, Dipl. Ing. et al, Adam Opel
Ag Patentabteilung Bahnhofsplatz 1 Postfach 17 10,
D-6090 Rüsselsheim (DE)**

ACTORUM AG

## Beschreibung

Die Erfindung bezieht sich auf eine Leuchteneinheit für Kraftfahrzeuge, bestehend aus einem länglichen Scheinwerfer und einer Blinkleuchte, welche in seitlich nebeneinander liegende Ausnehmungen eines Rahmens eingesetzt sind, und bei der am Scheinwerfer ein Halteglied zur Befestigung der Blinkleuchte vorgesehen ist, welches seitlich neben dem Scheinwerfer am Rahmen befestigt ist und ein federndes Rastelement zur Befestigung der Blinkleuchte aufweist, welche im verrasten Zustand mit ihrer Streuscheibe bis an den Scheinwerfer reicht. Eine solche Leuchteneinheit ist Gegenstand der GB-A-2 076 516 und der DE-A-2 656 755.

Bei den bekannten Leuchteneinheiten ist die Blinkleuchte ausschließlich an dem Halteglied befestigt. Die Art der Befestigung ist so gestaltet, daß die Blinkleuchte von vorn so weit in die Ausnehmung geschoben werden kann, bis sie außenseitig bündig gegen die Karosserieseitenwand anliegt. Dadurch können die durch Karosseriezusammenbautoleranzen bedingten unterschiedlichen Anschlußmaße der Karosserieteile ausgeglichen werden, so daß häßlich aussehende, breite Spalten zwischen Blinkleuchte und Seitenwand vermieden werden können. Die Leuchteneinheit als Ganzes ist karosserieseitig verschraubt.

Derartige Leuchteneinheiten sind vielfach so angeordnet, daß sie nur von vorn in die entsprechenden Ausnehmungen des Rahmens der Karosserie eingesetzt und befestigt werden können. Das gilt insbesondere für aus einem Nebelscheinwerfer und einer Blinkleuchte bestehende Leuchteneinheiten, die in der Stoßfängerverkleidung eingesetzt sind. Ein Verschrauben der Leuchteneinheit von oben oder unten ist oftmals aus Platzgründen nicht möglich oder wegen sichtbarer Schrauben unerwünscht und würde einen nachträglichen Ausbau des Scheinwerfers oder der Blinkleuchte, beispielsweise um einen Lampenwechsel vornehmen zu können, erheblich erschweren.

Der Erfindung liegt die Aufgabe zugrunde, eine Leuchteneinheit der eingangs genannten Art zu entwickeln, deren Scheinwerfer und Blinkleuchte nach vorn hin ausbaubar sind, ohne daß hierzu von außen sichtbare Befestigungsmittel notwendig werden und bei deren Montage ferner Einbautoleranzen untereinander sowie zu angrenzenden Karosserieteilen ausgeglichen werden.

Diese Aufgabe wird erfindungsgemäß dadurch gelöst, daß die Blinkleuchte an ihrer dem Scheinwerfer abgewandten Seite eine Rastnase hat, welche in eine in Haupterstreckungsrichtung des Scheinwerfers federnde Rastzunge des Rahmens einhängbar ist, und daß das an dem mittels Schraube am Rahmen befestigten Halteglied befindliche Rastelement aus einer Rastzunge mit einem zur Blinkleuchte hin gerichteten Rastvorsprung besteht.

Während das Halteglied nach dem Stand der Technik nur dazu dient, die Blinkleuchte an der Karosserie oder am Scheinwerfer zu halten, dient es gemäß der vorliegenden Erfindung gleichzeitig dazu, den Scheinwerfer an einer Seite mit dem Rahmen und damit mit der Karosserie zu verbinden. Deshalb braucht der Scheinwerfer an seiner gegenüberliegenden Seite lediglich in den Rahmen eingesetzt zu werden. Nach Festziehen des Haltegliedes ist der Scheinwerfer sicher mit dem Rahmen verbunden. Zusätzliche Haltelaschen sind nicht erforderlich. Die Schraube zum Befestigen des Haltegliedes ist von außen nicht zu sehen, da sie vom Randbereich der Streuscheibe der Blinkleuchte abgedeckt wird. Da am Halteglied ein Rastelement zur Befestigung der Blinkleuchte vorgesehen ist, ist sichergestellt, daß sich diese unmittelbar dem Scheinwerfer anschließt und kein toleranzabhängiger Zwischenraum entsteht. Bei dieser Ausführungsform braucht man zum Entrasten der Blinkleuchte nicht hinter Teile der Blinkleuchte greifen zu müssen. Es genügt, wenn man die Blinkleuchte zur Seite hin drückt, bis sie entrastet.

Scheinwerfer müssen üblicherweise in ihrer Höhe verstellbar sein, damit sie den Gegenverkehr nicht blenden und über die richtige Entfernung die Straße ausleuchten. Hierzu weisen solche Scheinwerfer eine Stellschraube auf. Eine solche Einstellmöglichkeit des Scheinwerfers kann bei der erfindungsgemäßen Leuchteneinheit leicht dadurch geschaffen werden, daß der Scheinwerfer um eine horizontale Achse schwenkbar an einer Seite der Ausnehmung im Rahmen und an der gegenüberliegenden Seite im Halteteil befestigt ist und daß im Abstand von der Achse im Halteteil hinter dem vom Randbereich der Streuscheibe der Blinkleuchte abgedeckten Bereich eine Stellschraube zur Verschwenkung des Scheinwerfers vorgesehen ist. Der Scheinwerfer ist bei dieser Ausführungsform ebenfalls von vorn ein- und ausbaubar. Auch die Stellschraube wird vom Randbereich der Streuscheibe der Blinkleuchte abgedeckt, so daß sie nicht von vorn zu sehen ist.

Zur weiteren Vereinfachung des Ausbaus der Blinkleuchte trägt es bei, wenn die Blinkleuchte in verrasteter Einbaustellung gegen einen die Blinkleuchte nach vorn aus der Ausnehmung heraus vorspannenden Federbügel des Rahmens anliegt. Bei dieser Ausführungsform läßt der Federbügel die Blinkleuchte nach vorn springen, sobald man sie durch Verschieben zur Seite entrastet hat. Sie kann dann leicht gegriffen und vollständig aus der Ausnehmung gezogen werden.

Ein unbeabsichtigtes Entrasten durch von vorn auf die Blinkleuchte wirkende Druckkräfte kann auf einfache Weise verhindert werden, wenn die Blinkleuchte an ihrer dem Scheinwerfer abgewandten Seite zwei Füße hat, mit denen sie auf einer Querverbindung des Rahmens aufsitzt.

Der Aus- und Einbau des Scheinwerfers ist trotz seiner erforderlichen Verschwenkbarkeit um eine horizontale Achse auf einfache Weise zu bewerkstelligen, wenn im rahmen an der der Blinkleuchte abgewandten Seite eine zur Blinkleuchte hin offene Achsaufnahme vorgesehen ist, in die ein am Scheinwerfer befestigter Achskopf ragt. Zum Einbau des Scheinwerfers braucht man lediglich den Scheinwerfer in seiner Ausnehmung so weit zur Seite zu schieben, bis daß der Achskopf in der Achsaufnahme sitzt und das Halteglied dann festzuschrauben. Anschließend ist die Stellschraube einzuschrauben und einzustellen. Der Ausbau des Scheinwerfers kann in umgekehrter Reihenfolge entsprechend einfach erfolgen.

Da dank der Erfindung der Scheinwerfer und die Blinkleuchte leicht nach vorn hin ausbaubar sind, kann sowohl beim Scheinwerfer als auch bei der Blinkleuchte jeweils der Reflektor mit der Streuscheibe verklebt und die Lampe in einer zum Lampenwechsel nach hinten aus dem Reflektor herausnehmbaren Lampenfassung angeordnet sein.

Die Erfindung läßt zahlreiche Ausführungsformen zu. Zur weiteren Verdeutlichung ihres Grundprinzips ist ein davon in der Zeichnung dargestellt und wird nachfolgend beschrieben. Die Zeichnung zeigt in:

Fig. 1 eine Ansicht von vorn auf ein Kraftfahrzeug mit zwei erfindungsgemäßen Leuchteneinheiten,

Fig. 2 einen Horizontalschnitt durch eine der Leuchteneinheiten nach Fig. 1,

Fig. 3 einen Vertikalschnitt durch eine Leuchteneinheit entlang der Linie III-III in Fig. 2.

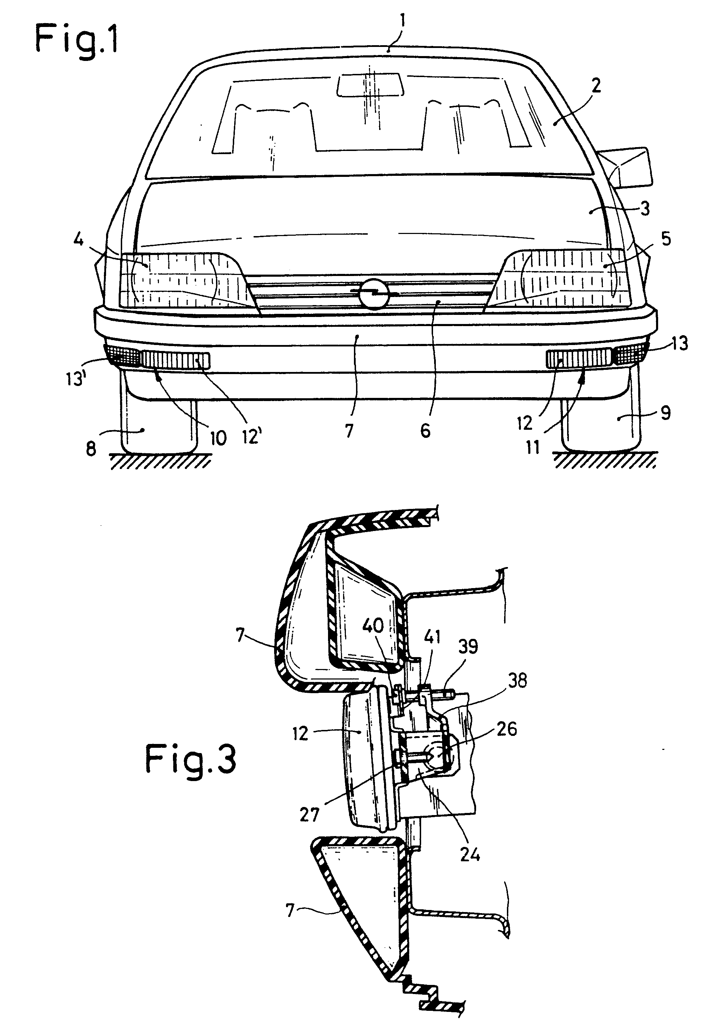

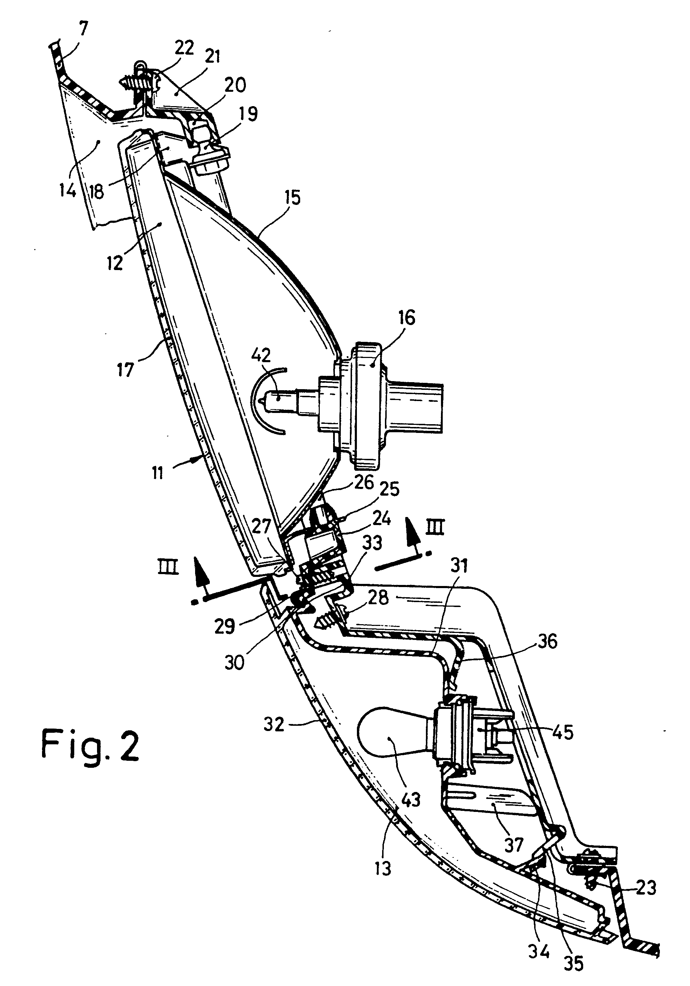

Die Fig. 1 zeigt von einem Kraftfahrzeug ein Dach 1, eine Windschutzscheibe 2, eine Motorhaube 3, Hauptscheinwerfer 4, 5, ein Kühlergitter 6, einen Stoßfänger 7 und zwei Vorderräder 8, 9. Wichtig für die Erfindung ist die Ausbildung zweier Leuchteneinheiten 10, 11, die jeweils einen Nebelscheinwerfer 12, 12' und eine Blinkleuchte 13, 13' aufweisen und im Stoßfänger 7 oder der Stoßfängerverkleidung angeordnet sind. Zur näheren Erläuterung der Gestaltung und Anordnung der Leuchteneinheiten 10, 11 sei nunmehr auf die Fig. 2 Bezug genommen.

Die Fig. 2 zeigt einen Teilbereich des Stoßfängers 7, welcher zur Aufnahme der Leuchteneinheit 11 eine längliche Ausnehmung 14 aufweist. In dieser Ausnehmung 14 sitzen nebeneinander der Nebelscheinwerfer 12 und die Blinkleuchte 13. Der Nebelscheinwerfer 12 besteht im wesentlichen aus einem Reflektor 15 mit einer Lampenfassung 16 und einer auf den Reflektor 15 aufgeklebten Streuscheibe 17. An der zur Fahrzeugmitte hin weisenden Schmalseite des Nebelscheinwerfers 12 ist eine Konsole 18 an der Rückseite des Reflektors 15 befestigt, die einen kugeligen Achskopf 19 trägt, der in eine Achsaufnahme 20 eines Rahmens 21 greift, welcher sowohl der Nebelscheinwerfer 12 als auch die Blinkleuchte 13 haltert und mittels Schrauben 22, 23, 28 am Stoßfänger 7 befestigt ist. An der der Konsole 18 gegenüberliegenden Schmalseite des Nebelscheinwerfers 12 ist am Rahmen 21 ein Halteglied 24 befestigt, auf dem ein Lagerbock 25 um eine Achse 26 schwenkbar angeordnet ist. Dieser Lagerbock 25 ist seinerseits fest mit dem Reflektor 15 verbunden. Die Achse 26 bildet zugleich die Schwenkachse des Achskopfes 19 an der gegenüberliegenden Seite des Nebelscheinwerfers 12. Das Halteglied 24 ist mittels einer Schraube 27 am Rahmen 21 befestigt.

Wichtig ist, daß das Halteglied 24 zur Blinkleuchte 13 hin ein federndes Rastelement 29 mit einem auf die Blinkleuchte 13 gerichteten Rastvorsprung 30 hat.

Die Blinkleuchte 13 besteht, genau wie der Nebelscheinwerfer 12, aus einem Reflektor 31 und einer Streuscheibe 32. Der Reflektor 31 hat an der Seite des Nebelscheinwerfers 12 einen Rastvorsprung 33, der im montierten Zustand hinter den Rastvorsprung 30 des Haltegliedes 24 greift. An der gegenüberliegenden Seite ist am Reflektor 31 eine Rastnase 34 vorgesehen, welche im montierten Zustand in eine federnde Rastzunge 35 des Rahmens 21 eingehakt ist. Zur Erleichterung des Ausbaus der Blinkleuchte 13 liegt gegen die Rückseite ihres Reflektors 31 ein Federbügel 36 des Rahmens 21 an. Dieser Federbügel 36 schwenkt die Blinkleuchte 13 mit ihrem nebelscheinwerferseitigen Ende nach vorn aus der Ausnehmung 14 heraus, sobald sie durch Verschieben zur in der Zeichnung gesehenrechten Außenseite am Rastvorsprung 30 entrastet ist, wobei die Schwenkachse hierbei im Bereich der Rastnase 34 und der federnden Rastzunge 35 verläuft. Ein unbeabsichtigtes Entrasten der Blinkleuchte 13 wird dadurch vermieden, daß diese mit zwei Füßen, von denen in Fig. 2 ein Fuß 37 zu sehen ist, gegen den Rahmen 21 anliegt und deshalb nicht von vorn tiefer in die Ausnehmung 14 hineingedrückt werden kann. Zum Entrasten ist eine Verschiebung der Blinkleuchte 13 zur äußeren Seite erforderlich.

Zu erkennen ist in Fig. 2 desweiteren, daß die Streuscheibe 32 der Blinkleuchte 13 zum Nebelscheinwerfer 12 hin über den Reflektor 31 der Blinkleuchte 13 bis unmittelbar neben die Streuscheibe 17 des Nebelscheinwerfers 12 reicht. Dadurch deckt die Streuscheibe 32 das Halteglied 24 und insbesondere die Schraube 27, mit der das Halteglied 24 am Rahmen 21 befestigt ist, nach vorn hin ab.

Der Fig. 3 ist zu entnehmen, wie der Nebelscheinwerfer 12 um die Achse 26 verschwenkt werden kann. Zu sehen ist, daß am Halteglied 26 ein Arm 38 angeformt ist, in dem von vorn her eine Stellschraube 39 sitzt. Diese Stellschraube 39 greift mit ihrem Kopf 40 über einen Arm 41 an der Rückseite des Nebelscheinwerfers 12. Wird die Stellschraube 39 tiefer in den Arm 41 geschraubt, so wird der Arm 41 unter Verschwenkung des Nebelscheinwerfers 12 im Uhrzeigersinn auf den Arm 37 zu bewegt.

## Patentansprüche

1. Leuchteneinheit für Kraftfahrzeuge, bestehend aus einem länglichen Scheinwerfer und einer Blinkleuchte, welche in seitlich nebeneinander liegende Ausnehmungen eines Rahmens eingesetzt sind, und bei der am Scheinwerfer ein Halteglied zur Befestigung der Blinkleuchte vorgesehen ist, welches seitlich neben dem Scheinwerfer am Rahmen befestigt ist und ein federndes Rastelement zur Befestigung der Blinkleuchte aufweist, welche im verrasteten Zustand mit ihrer Streuscheibe bis an den Scheinwerfer reicht, dadurch gekennzeichnet, daß die Blinkleuchte (13) an ihrer dem Scheinwerfer (12) abgewandten Seite eine Rastnase (34) hat, welche in eine in Haupterstreckungsrichtung des Scheinwerfers (12) federnde Rastzunge (35) des Rahmens (21) einhängbar ist, und daß das an dem mittels Schraube (27) am Rahmen (21) befestigten Halteglied (24) befindliche Rastelement (29) aus einer Rastzunge mit einem zur Blinkleuchte (13) hin gerichteten Rastvorsprung (30) besteht.

2. Leuchteneinheit nach Anspruch 1, dadurch gekennzeichnet, daß der Scheinwerfer (12) um eine horizontale Achse (26) schwenkbar an einer Seite der Ausnehmung (14) im Rahmen (21) und an der gegenüberliegenden Seite im Halteglied (24) befestigt ist und daß im Abstand von der Achse (26) im Halteglied (24) hinter dem vom Randbereich der Streuscheibe (32) der Blinkleuchte (13) abgedeckten Bereich eine Stellschraube (39) zur Verschwenkung des Scheinwerfers (12) vorgesehen ist.

3. Leuchteneinheit nach den Ansprüchen 1 und 2, dadurch gekennzeichnet, daß die Blinkleuchte (13) in verrasteter Einbaustellung gegen einen die Blinkleuchte (13) nach vorn aus der Ausnehmung (14) heraus vorspannenden Federbügel (36) des Rahmens (21) anliegt.

4. Leuchteneinheit nach den Ansprüchen 1 bis 3, dadurch gekennzeichnet, daß die Blinkleuchte (13) an ihrer dem Scheinwerfer (12) abgewandten Seite zwei Füße (37) hat, mit denen sie auf einer Querverbindung des Rahmens (21) aufsitzt.

5. Leuchteneinheit nach den Ansprüchen 1 bis 4, dadurch gekennzeichnet, daß im Rahmen (21) an der der Blinkleuchte (13) abgewandten Seite eine zur Blinkleuchte (13) hin offene Achsaufnahme (20) vorgesehen ist, in die ein am Scheinwerfer (12) befestigter Achskopf (19) ragt.

6. Leuchteneinheit nach einem oder mehreren der vorangehenden Ansprüche, dadurch gekennzeichnet, daß sowohl beim Scheinwerfer (12) als auch bei der Blinkleuchte (13) jeweils der Reflektor (15, 31) mit der Streuscheibe (17, 31) verklebt und die Lampe (42, 43) in einer zum Lampenwechsel nach hinten aus dem Reflektor (15, 31) herausnehmbaren Lampenfassung (16, 45) angeordnet ist.

## Claims

1. Lamp unit for motor vehicles, consisting of an elongate headlamp and a direction indicator lamp which are inserted in recesses of a frame located laterally adjacent to each other, and in which on the headlamp is provided a retaining member for mounting the direction indicator lamp, which is attached to the frame laterally adjacent to the headlamp and comprises a spring latching element for mounting the direction indicator lamp, which in the latched position extends with its diffusing lens as far as the headlamp, characterised in that the direction indicator lamp (13) has on its side remote from the headlamp (12) a latching tab (34) which can be hooked in a latching tongue (35) of the frame (21) which has spring action in the main direction of the headlamp (12), and the latching element (29) located on the retaining member (24) attached to the frame (21) by a screw (27) consists of a latching tongue with a latching projection (30) pointing towards the direction indicator lamp (13).

2. Lamp unit according to claim 1, characterised in that the headlamp (12) is mounted on one side of the recess (14) in the frame (21) and on the opposite side in the retaining member (24) so as to allow it to pivot about a horizontal shaft (26), and at a distance from the shaft (26) in the retaining member (24) behind the region covered by the edge region of the diffusing lens (32) of the indicator lamp (13) is provided a set screw (39) for pivoting the headlamp (12).

3. Lamp unit according to claims 1 and 2, characterised in that the indicator lamp (13) in the latched fitted position abuts against a spring clip (36) of the frame (21) which biases the indicator lamp (13) forwards out of the recess (14).

4. Lamp unit according to claims 1 to 3, characterised in that the indicator lamp (13) on its side remote from the headlamp (12) has two feet (37) by which it rests on a cross member of the frame (21).

5. Lamp unit according to claims 1 to 4, characterised in that there is provided in the frame (21), on the side remote from the indicator lamp (13), an axle holder (20) which opens towards the indicator lamp (13) and into which extends an axle head (19) attached to the headlamp (12).

6. Lamp unit according to one or more of the preceding claims, characterised in that in the case of both the headlamp (12) and the indicator lamp (13) the reflector (15, 31) is glued to the diffusing lens (17, 31) and the bulb (42, 43) is disposed in a bulb socket (16, 45) which can be removed from the reflector (15, 31) rearwards to change the bulb.

## Revendications

1. Unité d'éclairage pour véhicules automobiles, constituée par un projecteur ayant une forme allongée et par un feu clignotant, lesquels sont placés dans des évidements d'un cadre situés l'un à côté de l'autre, et dans laquelle il est prévu, sur le projecteur, pour la fixation du feu clignotant, un organe de maintien qui est fixé au cadre, latéralement à côté du projecteur, et présente un élément de verrouillage destiné à fixer le feu clignotant dont le verre diffuseur, en condition verrouillée, s'étend jusqu'au projecteur, caractérisée par le fait qu'en son côté éloigné du projecteur (12), le feu clignotant possède un nez de verrouillage (34) qui peut être accroché dans une languette de verrouillage (35) du cadre (21), laquelle est déformable élastiquement suivant la direction longitudinale du projecteur (12), et par le fait que l'élément de verrouillage (29), se trouvant sur l'organe de maintien (24) fixé par vis (27) au cadre (21), est constitué par une languette de verrouillage avec un saillant de verrouillage (30) dirigé vers le feu clignotant (13).

2. Unité d'éclairage selon la revendication 1, caractérisée par le fait que le projecteur (12) est fixé, avec possibilité de pivotement autour d'un axe horizontal (26), à un côté de l'évidement (14) dans le cadre et, du côté opposé, dans l'organe de maintien (24), et par le fait qu'une vis de réglage (39) pour faire pivoter le projecteur (12) est prévue à distance de l'axe (26), dans l'organe de maintien (24), derrière la région recouverte par la région marginale du verre diffuseur (32) du feu clignotant (13).

3. Unité d'éclairage selon les revendications 1 et 2, caractérisée par le fait qu'en position montée et verrouillée, le feu clignotant s'applique contre un arceau élastique (36) du cadre (21), précontraignant le feu clignotant (13) vers l'avant, hors de l'évidement (14).

4. Unité d'éclairage selon les revendications 1 à 3, caractérisée par le fait qu'en son côté éloigné du projecteur (12), le feu clignotant (13) possède deux pieds (37) par lesquels il prend assise sur une traverse du cadre (21).

5. Unité d'éclairage selon les revendications 1 à 4, caractérisée par le fait qu'il prévu, dans le cadre (21), sur le côté, éloigné du feu clignotant (13), un logement d'axe (20) qui est ouvert en direction du feu clignotant (13) et dans lequel s'engage une tête d'axe (19) fixée au projecteur (12).

6. Unité d'éclairage selon une ou plusieurs des revendications précédentes, caractérisée par le fait qu'aussi bien sur le projecteur (12) que sur le feu clignotant (13), le réflecteur (15, 31) est collé au verre diffuseur (17, 31) et la lampe (42, 43) est agencée dans une monture (16, 45) qui, pour le changement de lampe, peut être retirée du réflecteur (15, 31) vers l'arrière.

# Fig.1

# Fig.3

Fig. 2